# EUROPÄISCHE PATENTANMELDUNG

(11) **EP 4 428 571 A1**
(43) Veröffentlichungstag der Anmeldung: **11.09.2024**
(21) Anmeldenummer: 23160284.8
(22) Anmeldetag: 06.03.2023
(51) Int. Cl.: G01S 13/00, G01S 13/78, G01S 13/87, G01S 13/88, G01S 13/42, G01S 13/46, G01S 13/58

(54) **VORRICHTUNG UND VERFAHREN ZUR UMFELDERFASSUNG MINDESTENS EINES OBJEKTS ODER OBJEKTTEILS**

(71) Anmelder: Universität Ulm, 89081 Ulm (DE)
(72) Erfinder: Werbunat, David, 89129 Langenau (DE); Waldschmidt, Christian, 89081 Ulm (DE); Meinecke, Benedikt, 89081 Mähringen (DE)
(74) Vertreter: Pfenning, Meinig & Partner mbB

(57) **Zusammenfassung**

Vorrichtung zur Umfelderfassung mindestens eines Objekts oder Objektteils, wobei die Vorrichtung umfasst:
eine Radareinrichtung umfassend einen Radar-Sender und einen Radar-Empfänger, wobei der Radar-Sender eingerichtet ist, ein erstes Signal zu senden und der Radar-Empfänger eingerichtet, ist eine Reflexion des ersten Signals, ein zweites Signal und/oder eine Reflexion des zweiten Signals und ein drittes Signal und/oder eine Reflexion des dritten Signals zu empfangen;
mindestens ein Objekt, das mindestens einen Radar-Repeater umfasst, wobei der Radar-Repeater eingerichtet ist, das erste Signal zu empfangen, zu modulieren und das modulierte erste Signal als zweites Signal auszusenden und eine Reflexion des zweiten Signals zu empfangen, zu modulieren und das modulierte zweite Signal als drittes Signal auszusenden;
eine Auswerteeinheit, die eingerichtet ist, das von dem Radar-Empfänger empfangene zweite Signal und dritte Signal und/oder die Reflexion des ersten, zweiten und dritten Signals zu verarbeiten, auszuwerten und das Umfeld aus einer jeweiligen Perspektive des mindestens einen Radar-Repeaters zu berechnen.

## Beschreibung

Damit Industrieroboter sicher und zuverlässig arbeiten können, ist es notwendig das Umfeld dieser zu überwachen. Nur so lassen sich beispielsweise Kollisionen mit anderen Robotern, Anlagen, Gebäudeteilen, Gegenständen oder Personen vermeiden.

Eine solche Umfeldüberwachung wird üblicherweise mittels Kameras bzw. Stereokameras, Ultraschallsensoren, Laser bzw. LIDAR Sensoren realisiert. Auch das Zusammenspiel mehrere der vorgenannten Verfahren kommt zur Anwendung. Ebenso kann eine solche Umfeldüberwachung mit Hilfe eines einzelnen Radarsensors, der direkt an dem Objekt, dessen Umfeld überwacht werden soll, befestigt ist.

Ultraschallsensoren bieten jedoch nur eine geringe Genauigkeit. Laser- sowie Kamerasysteme sind anfällig für optische Störungen. Weiter lassen sich mit ihnen nur schlecht direkte Messungen der relativen Geschwindigkeit realisieren.

Aufgabe der vorliegenden Erfindung ist es daher, die Umfelderfassung von Objekten zu verbessern.

Diese Aufgabe wird mit den Merkmalen der unabhängigen Ansprüche gelöst. Die abhängigen Ansprüche stellen dabei vorteilhafte Weiterbildungen dar.

Die Erfindung betrifft somit eine Vorrichtung zur Umfelderfassung mindestens eines Objekts oder Objektteils. Die Vorrichtung umfasst eine Radareinrichtung. Diese Radareinrichtung umfasst einen Radar-Sender und einen Radar-Empfänger. Der Radar-Sender ist eingerichtet ein erstes Signal zu senden und der Radar-Empfänger ist eingerichtet, eine Reflexion des ersten Signals, ein zweites Signal und/oder eine Reflexion des zweiten Signals und ein drittes Signal und/oder eine Reflexion des dritten Signals zu empfangen. Weiter umfasst die Vorrichtung mindestens ein Objekt, das mindestens einen Radar-Repeater umfasst. Der Radar-Repeater ist eingerichtet, das erste Signal zu empfangen, zu modulieren und das modulierte erste Signal als zweites Signal auszusenden und eine Reflexion des zweiten Signals zu empfangen, zu modulieren und das modulierte zweite Signal als drittes Signal auszusenden. Schließlich umfasst die Vorrichtung auch eine Auswerteeinheit. Diese ist eingerichtet, das von dem Radar-Empfänger empfangene zweite und dritte Signal und/oder die Reflexion des ersten, zweiten und dritten Signals zu verarbeiten, auszuwerten und das Umfeld aus einer jeweiligen Perspektive des mindestens einen Radar-Repeaters zu berechnen.

Das Objekt kann beweglich oder auch unbeweglich sein. Beweglich bedeutet, dass das Objekt als solches beweglich im Raum ist oder aber, dass nur Teile des Objektes beweglich sind.

Bei der Radareinrichtung kann es sich um eine bewegliche oder stationäre Radareinrichtung handeln. Stationär bedeutet, dass die Radareinrichtung an einem bestimmten Ort im Raum so angeordnet ist, dass eine Radarverbindung zwischen dem Radar-Sender und dem Radar-Empfänger der Radareinrichtung sowie dem mindestens einen Radar-Repeater hergestellt werden kann und die Radareinrichtung nicht von dem bestimmten Ort fortbewegt wird. Ist die Radareinrichtung beweglich und ist die Bewegung der Radareinrichtung bekannt, so ist die Umgebung eines Radar-Repeaters auch bei bewegter Radareinrichtung genau bestimmbar, mindestens jedoch relativ zur Bewegung der Radareinrichtung.

Das Aussenden des ersten Signals und das Empfangen der Reflexion des ersten Signals repräsentieren den klassischen Radarbetrieb. Dabei kann aus der empfangenen Reflexion des erstens Signals z.B. die Entfernung zum Objekt, welches das erste Signal reflektiert hat, bestimmt werden. Dies kann beispielsweise aus der Signallaufzeit, also derZeit zwischen dem Aussenden des ersten Signals und dem Empfangen der Reflexion des ersten Signals berechnet werden. Weiter ist es möglich, z.B. über den Dopplereffekt, eine Relativbewegung zwischen dem Radar-Sender/Empfänger und dem Objekt zu ermitteln. Durch ein Aneinanderreihen einzelner Messungen kann auch eine zurückgelegte Wegstrecke und somit eine Absolutgeschwindigkeit des Objektes ermittelt werden. Dies ist auch durch eine Kombination mehrerer verwendeter Repeater möglich. Ist der Radar-Sender/Empfänger mit einer Winkelschätzfähigkeit ausgestattet, so ist ebenso eine Bestimmung des Winkel bzw. der Richtung zum Objekt möglich.

Das zweite Signal hat die Aufgabe eine Bestimmung einer Distanz und einer Geschwindigkeit des Radar-Repeaters gegenüber dem Radar-Empfänger und dem Radar-Sender zu ermöglichen. Ist der Radar-Sender/Empfänger und/oder Radar-Repeater mit einer Winkelschätzfähigkeit ausgestattet, ist es zudem möglich eine Position des Repeaters zu bestimmen. Weiter dient das zweite Signal als Referenz, um in der Signalverarbeitung der Auswerteeinheit den Pfad Radareinrichtung-Repeater sowie den Pfad Repeater-Radareinrichtung aus dem dritten Signal herauszurechnen.

Mit Hilfe des dritten Signals, im Zusammenspiel mit dem ersten und/oder zweiten Signal bzw. deren Reflexionen, ist die Auswerteeinheit dann in der Lage, über den Pfad Radareinrichtung-Repeater-Umgebungsobjekt-Repeater-Radareinrichtung, Distanzen und relative Geschwindigkeiten zwischen dem Repeater und dem Umfeld des Repeaters, zu bestimmen.

Weiter betrifft die Erfindung ein Verfahren zur Umfelderfassung mindestens eines Objekts oder Objektteils. Das Verfahren umfasst die folgenden Schritte:
- Aussenden eines ersten Signals durch einen Radar-Sender einer Radar-Einrichtung;
- Empfangen des ersten Signals durch einen Radar-Repeater, der an einem Objekt befestigt ist;
- Modulieren des ersten Signals durch den Radar-Repeater;
- Aussenden des modulierten ersten Signals als ein zweites Signal durch den Radar-Repeater;
- Empfangen des reflektierten zweiten Signals durch den Radar-Repeater;
- Modulieren des reflektierten zweiten Signals durch den Radar-Repeater;
- Aussenden des modulierten zweiten Signals als ein drittes Signal durch den Radar-Repeater;
- Empfangen des zweiten und dritten Signals und/oder der Reflexion des ersten, zweiten und dritten Signals durch einen Radar-Empfänger der Radar-Einrichtung;
- Auswerten des von dem Radar-Empfänger der Radar-Einrichtung empfangenen zweiten und dritten Signals und/oder der empfangenen Reflexion des ersten, zweiten und dritten Signals und Berechnen eines Umfeldes aus einer jeweiligen Perspektive des mindestens einen Radar-Repeaters.

Gemäß einer bevorzugten Ausführungsform ist die Auswerteeinheit weiter eingerichtet, eine Distanz und/oder Geschwindigkeit von dem Radar-Repeater zu Objekten im Umfeld des Radar-Repeaters zu berechnen.

Bevorzugt verfügt die Radareinrichtung über Winkelschätzfähigkeit und die Auswerteeinheit ist weiter eingerichtet, eine Position des mindestens einen Radar-Repeaters zu bestimmen.

Bevorzugt ist in dem von jedem Radar-Repeater ausgesendeten zweiten und/oder dritten Signal eine eindeutige individuelle Identifikation des jeweiligen Radar-Repeaters kodiert.

Ebenfalls bevorzugt ist in dem von jedem Radar-Repeater ausgesendeten zweiten und/oder dritten Signal eine eindeutige individuelle Identifikation des jeweiligen Signals kodiert.

Eine solche Kodierung einer individuellen Identifikation eines jeweiligen Radar-Repeaters bzw. des ausgesendeten zweiten und/oder dritten Signals kann auf verschiedene Weisen erfolgen. Die Möglichkeiten schließen eine Amplituden- und/oder Frequenzmodulation des ausgesendeten Signals ein. Auch das Hinzufügen einer eindeutigen Signalmusters, z.B. am Anfang oder Ende eines Sendedurchlaufs des Signals ist möglich. Der Fachmann kennt zahlreiche Möglichkeiten eine solche eindeutige individuelle Identifikation eines Signals zu realisieren.

Mit Hilfe einer solchen eindeutigen individuellen Identifikation ist es der Auswerteeinheit möglich die verschiedenen empfangenen Signale zu trennen und anschließend einzeln zu betrachten. So kann vermieden werden, dass sich das erste, zweite und dritte Signal sowie deren Reflexionen gegenseitig durch Überlagerung stören und Mess- bzw. Berechnungsergebnisse verfälschen. So ist es der Auswerteeinheit möglich die einzelnen Signalpfade besser nachzuvollziehen und über die aus den empfangenen Signalen gewonnen Informationen die Umgebung um den mindestens einen Radar-Repeater zu berechnen.

Weiterhin ist es von Vorteil, wenn der mindestens eine Radar-Repeater weiter eingerichtet ist, das zweite und/oder dritte Signal vor dem Aussenden zu verstärken. So kann sichergestellt werden, dass auch bei längeren Signalpfaden und damit verbundenen längeren Signallaufzeiten oder starker Streuung des reflektierten Signals die empfangene Reflexion einen für die Auswertung ausreichend hohen Signalpegel aufweist.

Vorzugsweise ist der mindestens eine Radar-Repeater nicht eingerichtet, außer der Modulation des empfangen Signals, einer Verstärkung und vorzugsweise der Kodierung einer eindeutigen Identifikation des jeweiligen mindestens einen Radar-Repeaters und/ oder Signals weitere Signalverarbeitung und Signalauswertung zu umfassen.

Da ein so eingerichteter Radar-Repeater nur sehr wenig Rechenleistung bzw. Signalverarbeitungsleistung benötigt, kann er mit Komponenten gefertigt werden, die wenig Energie konsumieren. Da wenig Rechenleistung bzw. Signalverarbeitungsleistung benötigt wird ist es außerdem möglich so zu konstruieren, dass die Komponenten nur wenig Platz benötigen und der Radar-Repeater entsprechend kompakt ausgestaltet werden kann. Durch die geringe benötigte Rechenleistung bzw. Signalverarbeitungsleistung ist es nicht nur möglich die Radar-Repeater sehr kostengünstig zu produzieren, sie können auch sehr energiesparend ausgestaltet werden. So ist es auch möglich den Radar-Repeater mittels Batterien oder Akkus mit der benötigten Energie zu versorgen, was eine sehr flexible Positionierung des Radar-Repeaters an dem Objekt ermöglicht. Ebenso ist eine Stromversorgung über Solarpanele denkbar oder über Energie die aus der Bewegung des Objektes gewonnen wurde.

Vorzugsweise ist der mindestens eine Repeater eingerichtet, das empfange erste Signal unverzüglich zu modulieren und als zweites Signal wieder auszusenden und die empfange Reflexion des zweiten Signals unverzüglich zu modulieren und als drittes Signal wieder auszusenden.

Dies wird auch dadurch ermöglicht, dass der Radar-Repeater nahezu keine bzw. nur sehr geringe Signalverarbeitung durchführt und so keine großen Verzögerungen zwischen dem Empfangen eines Signals und dem Aussenden des modulierten Signals entstehen.

Von Vorteil ist wenn das mindestens eine Objekt mehrere Radar-Repeater umfasst. Dabei sind vorzugsweise die Signale aller verwendeten Repeater durch eine individuelle Identifizierung, z.B. durch Modulation der jeweiligen Signale, eindeutig identifizierbar.

Vorzugsweise ist der Radar-Empfänger weiter eingerichtet, die zweiten und dritten Signale und/oder deren Reflexionen aller Radar-Repeater zu empfangen und die Auswerteeinheit ist weiter eingerichtet, das Umfeld des Objekts, an dem die Repeater befestigt sind, aus der jeweiligen Perspektive aller Radar-Repeater, von denen Signale empfangen wurden, zu berechnen.

Weiter ist die Auswerteeinheit vorzugsweise eingerichtet, mehrere empfangene zweite und/oder dritte Signale und/oder deren Reflexionen anhand der individuellen Identifizierung zu trennen und jeweils einzeln auszuwerten.

Vorzugsweise ist die Auswerteeinheit eingerichtet, insbesondere auf Basis von Unterschieden in mindestens einer Signalphase und/oder der Laufzeit des zweiten und/oder dritten Signals Winkel, Lage und/oder Orientierung der Objekte zu bestimmen.

Weiter kann der Repeater so aufgebaut sein kann, dass er mit mehreren Sendeantennen mehrere zweite Signale und mehrere dritte Signale zu erzeugt, die eindeutig identifizierbar sind. Diese mehreren zweiten und dritten Signale können dazu genutzt werden, die Bestimmung der Winkel, Lage und/oder Orientierung der Objekte zu verbessern.

Somit ist es möglich die Umfelderfassung zu verbessern, in dem das Umfeld aus mehreren Perspektiven, nämlich den jeweiligen Positionen der mehreren Radar-Repeatern, zu erfassen. Dabei ist nur eine einzige Radareinrichtung notwendig. Das von ihr ausgesendete Signal wird über die mehreren Repeater empfangen und erneut ausgesendet. So kann der Radar-Empfänger der Radareinrichtung die Signale der mehreren Radar-Repeater sowie deren Reflexionen empfangen. Trotz nur eines ausgesendeten Signals, ist es somit für die Auswerteeinheit möglich die Umgebung aus der Sicht jedes einzelnen Repeaters, von dem Signale empfangen wurden, zu berechnen.

Mit Hilfe mehrerer Radar-Repeater können zudem weitere Informationen auf Basis der Unterschiede in den Phasen der empfangenen Signale gewonnen werden. So können beispielsweise Winkel von Umgebungsobjekten ermittelt werden.

Die mehreren Radar-Repeater können dabei an demselben Objekt an unterschiedlichen Positionen befestigt sein, um eine möglichst umfassende Umfelderfassung zu ermöglichen. Auch kann das Objekt sehr engmaschig mit Radar-Repeatern ausgestattet werden, um eine Umfelderfassung mit sehr hoher Genauigkeit zu ermöglichen. Ebenso ist es möglich die mehreren Radar-Repeatern an unterschiedlichen Objekten zu befestigen und so mittels nur einer Radareinheit das Umfeld mehrerer Objekte zu erfassen.

Sind die Positionen der Repeater bekannt, kann ein Winkel zwischen einem Umgebungsobjekt und dem Radar-Repeater mit Hilfe von einer Signalphase bestimmt werden. Hierfür ist es von Vorteil, wenn die mehreren Repeater sehr nah aneinander positioniert sind, z.B. mechanisch auf einer Leiterplatte. Ebenso kann eine solche Bestimmung über Multilateration über die unterschiedlichen Distanzen zwischen verschiedenen Repeatern und dem Umgebungsobjekt erfolgen. Eine weitere Möglichkeit, z.B. bei einem sich bewegenden Objekt und damit sich bewegendem Radar-Repeater, ist mehrere, zeitlich aufeinander folgende Messungen zu kombinieren und mit Hilfe eines SAR-Ansatzes (SAR, synthetic aperture radar) eine Erfassung der Umgebung des Radar-Repeaters zu berechnen.

Ein weiterer Vorteil des beanspruchten Gegenstands ist, dass das Verfahren bzw. die Vorrichtung eine direkte Messung der relativen Geschwindigkeiten ermöglicht und diese Messung nicht durch optische Störfaktoren wie Staub, Nebel, Lichtstreuung an Oberflächen oder ähnlichem beeinflusst wird.

Bevorzugt verwendet die Radareinrichtung ein moduliertes Radar. Hierbei kann z.B. der Impuls, die Frequenz, die Phase oder die Amplitude der Radarstrahlung moduliert werden. Beispiele für modulierte Radareinrichtungen sind ein OFDM (orthogonal frequency-division multiplexing) -Radar oder ein FMCW (frequency modulated continuous wave radar) -Radar. Auch andere geeignete Radar-Systeme, insbesondere modulierte Radar-Systeme, können für die Realisierung des beanspruchten Gegenstandes verwendet werden.

Es zeigen:
- Figur 1: ein Anwendungsbeispiel einer Vorrichtung zur Umfelderfassung
- Figur 2: eine Vorrichtung zur Umfelderfassung
- Figur 3: ein Ablaufplan der Schritte des Verfahrens zur Umfelderfassung

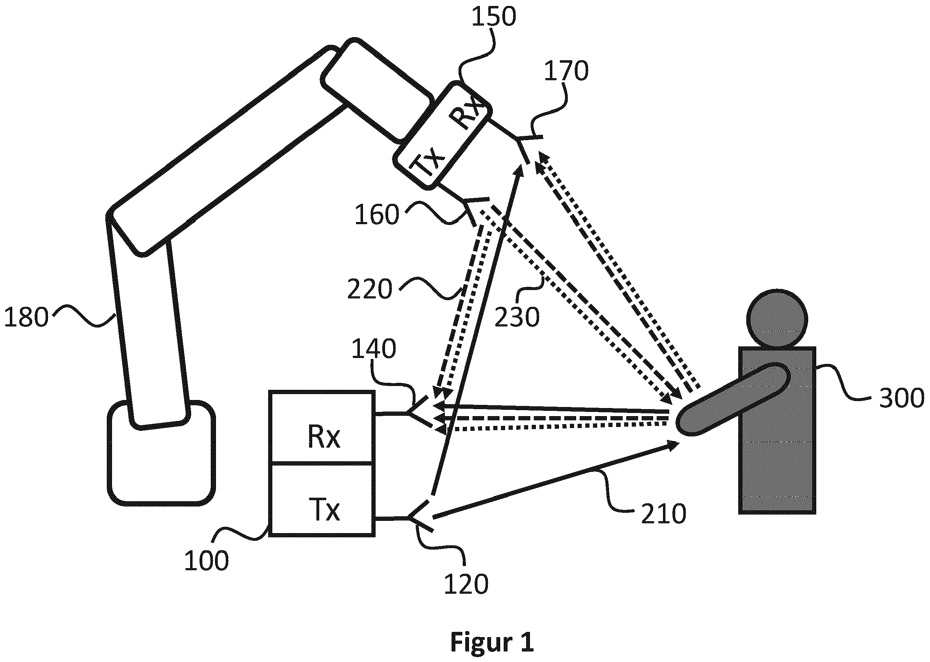

Figur 1 zeigt ein Anwendungsbeispiel einer Vorrichtung zur Umfelderfassung gemäß der vorliegenden Anmeldung. Die Radareinrichtung 100 umfasst mindestens einen Radar-Sender 110 (Tx), der mit mindestens einer Sendeantenne 120 ausgestattet ist, und mindestens einen Radar-Empfänger 130 (Rx), der mit mindestens einer Empfangsantenne 140 ausgestattet ist.

Der Radar-Sender 110 sendet mittels der mindestens einen Sendeantenne 120 ein erstes Signal 210 aus. Das erste Signal 210 ist in der Figur mit einer durchgehenden Linie gekennzeichnet. Das erste Signal 210 trifft auf ein Umgebungsobjekt 300 bzw. auf einen Teil des Umgebungsobjektes und wird zu dem Radar-Empfänger 130 reflektiert. Die mindestens eine Empfangsantenne 140 des Radar-Empfängers 130 empfängt die Reflexion des ersten Signals 210.

Ebenso wird das erste Signal 210, welches von dem Radar-Sender 110 ausgesendet wurde, auch von einer Empfangsantenne 170 eines Radar-Repeaters 150, welcher an einen Objekt 180 befestigt ist, empfangen. Von dem Radar-Repeater 150 wird das erste Signal 210 moduliert und ggf. verstärkt und als zweites Signal 220 über eine Sendeantenne 160 ausgesendet. Das zweite Signal 220 ist in der Figur als gestrichelte Linie dargestellt.

Das zweite Signal 220 wird von einer Empfangsantenne 140 des Radar-Empfängers 130 empfangen. Weiter trifft das zweite Signal 220 auch auf das Umgebungsobjekt 300 und wird von ihm reflektiert. Die Reflexion des zweiten Signals 220 wird von einer Empfangsantenne 140 des Radar-Empfängers 130 und auch von einer Empfangsantenne 170 des Radar-Repeaters 150 empfangen.

Der Radar-Repeater 150 moduliert die empfangene Reflexion des zweiten Signals 220 erneut, verstärkt sie ggf. und sendet sie als drittes Signal 230 über eine Sendeantenne 160 des Radar-Repeaters aus.

Das dritte Signal 230 wird von einer Empfangsantenne 140 des Radar-Empfängers 130 empfangen. Weiter trifft das dritte Signal 230 auch auf das Umgebungsobjekt 300 und wird von ihm reflektiert. Die Reflexion des dritten Signals 230 wird von einer Empfangsantenne 140 des Radar-Empfängers 130 und auch von einer Empfangsantenne 170 des Radar-Repeaters 150 empfangen.

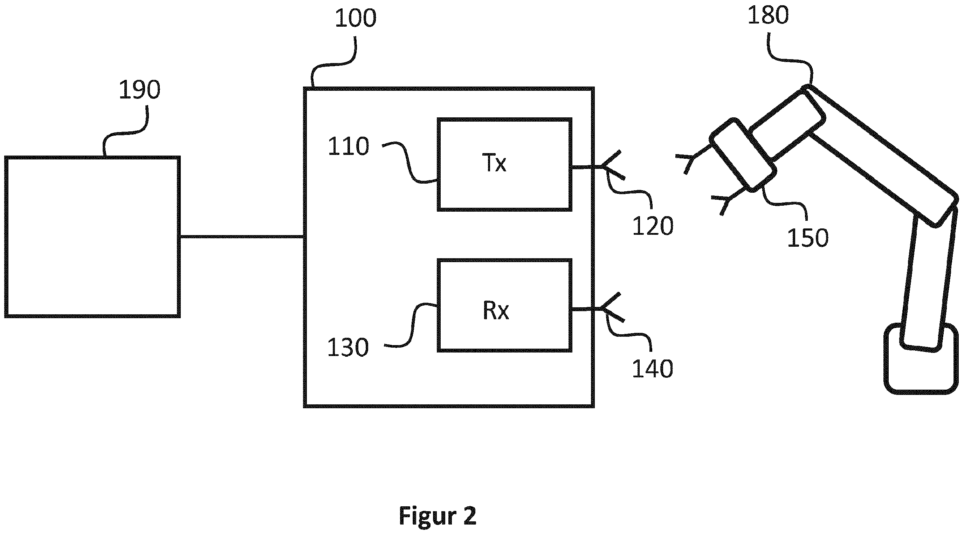

Figur 2 zeigt eine Vorrichtung zur Umfelderfassung gemäß der vorliegenden Anmeldung. Eine Radareinrichtung 100 umfasst mindestens einen Radar-Sender 110 (Tx), der mit mindestens einer Sendeantenne 120 ausgestattet ist, und mindestens einen Radar-Empfänger 130 (Rx), der mit mindestens einer Empfangsantenne 140 ausgestattet ist.

Weiter umfasst die Vorrichtung mindestens einen Radar-Repeater 150, der an einem Objekt 180 befestigt ist.

Die Radareinrichtung 100 ist weiter mit einer Auswerteeinheit 190 verbunden. Diese Auswerteeinheit ist eingerichtet von dem Radar-Empfänger 130 empfangene Signale und Reflexionen von Signalen zu verarbeiten, auszuwerten und das Umfeld aus einer jeweiligen Perspektive des mindestens einen Radar-Repeaters 150 zu berechnen.

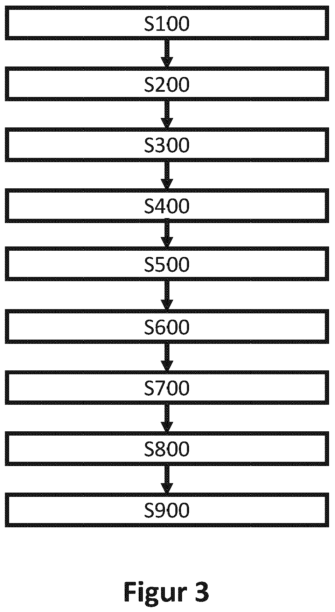

Figur 3 zeigt einen Ablaufplan der Schritte des Verfahrens zur Umfelderfassung gemäß der vorliegenden Anmeldung.

In Schritt S100 wird ein erstes Signal 210 durch einen Radar-Sender 110 einer Radar-Einrichtung 100 ausgesendet.

In Schritt S200 wird das erste Signal 210 durch einen Radar-Repeater 150, der an einem Objekt 180 befestigt ist, empfangen.

In Schritt S300 wird das empfangene erste Signal 210 durch den Radar-Repeater 150 moduliert und ggf. verstärkt.

In Schritt S400 wird das modulierte erste Signal als ein zweites Signal 220 durch den Radar-Repeater 150 ausgesendet.

In Schritt S500 empfängt der Radar-Repeater 150 eine Reflexion des zweiten Signals 220.

In Schritt S600 moduliert der Radar-Repeater 150 die empfangene Reflexion des zweiten Signals 220 und verstärkt das Signal falls notwendig.

In Schritt S700 wird das modulierte zweite Signal als ein drittes Signal 230 durch den Radar-Repeater 150 ausgesendet.

In Schritt S800 wird das zweite und dritte Signal und/oder eine Reflexion des ersten, zweiten und dritten Signals durch einen Radar-Empfänger 130 der Radar-Einrichtung 100 empfangen.

In Schritt S900 findet eine Auswertung des von dem Radar-Empfänger 130 der Radar-Einrichtung 100 empfangen zweiten Signals 220 und dritten Signals 230 und/oder der empfangenen Reflexion des ersten, zweiten und dritten Signals statt. Mit Hilfe dieser Auswertung wird weiter ein Umfeld aus einer jeweiligen Perspektive des mindestens einen Radar-Repeaters 150 berechnet.

### Bezugszeichenliste

- 100: Radar-Einrichtung
- 110: Radar-Sender
- 120: Sendeantenne
- 130: Radar-Empfänger
- 140: Empfangsantenne
- 150: Radar-Repeater
- 160: Sendeantenne
- 170: Empfangsantenne
- 180: Objekt
- 190: Auswerteeinheit
- 210: erstes Signal
- 220: zweites Signal
- 230: drittes Signal
- 300: Umgebungsobjekt

## Patentansprüche

1. Vorrichtung zur Umfelderfassung mindestens eines Objekts (180) oder Objektteils, wobei die Vorrichtung umfasst:
eine Radareinrichtung (100) umfassend einen Radar-Sender (110) und einen Radar-Empfänger (130), wobei der Radar-Sender (110) eingerichtet ist, ein erstes Signal (210) zu senden und der Radar-Empfänger (130) eingerichtet, ist eine Reflexion des ersten Signals (210), ein zweites Signal (220) und/oder eine Reflexion des zweiten Signals (220) und ein drittes Signal (230) und/oder eine Reflexion des dritten Signals (230) zu empfangen;
mindestens ein Objekt (180), das mindestens einen Radar-Repeater (150) umfasst, wobei der Radar-Repeater (150) eingerichtet ist, das erste Signal (210) zu empfangen, zu modulieren und das modulierte erste Signal als zweites Signal (220) auszusenden und eine Reflexion des zweiten Signals (220) zu empfangen, zu modulieren und das modulierte zweite Signal als drittes Signal (230) auszusenden;
eine Auswerteeinheit (190), die eingerichtet ist, das von dem Radar-Empfänger (130) empfangene zweite Signal (220) und dritte Signal (230) und/oder die Reflexion des ersten, zweiten und dritten Signals zu verarbeiten, auszuwerten und das Umfeld aus einer jeweiligen Perspektive des mindestens einen Radar-Repeaters (150) zu berechnen.

2. Verfahren zur Umfelderfassung mindestens eines Objekts (180) oder Objektteils, wobei das Verfahren die folgenden Schritte umfasst:
Aussenden (S100) eines ersten Signals (210) durch einen Radar-Sender (110) einer Radar-Einrichtung (100);
Empfangen (S200) des ersten Signals (210) durch einen Radar-Repeater (150), der an einem Objekt (180) befestigt ist;
Modulieren (S300) des ersten Signals (210) durch den Radar-Repeater (150);
Aussenden (S400) des modulierten ersten Signals als ein zweites Signal (220) durch den Radar-Repeater (150);
Empfangen (S500) des reflektierten zweiten Signals (220) durch den Radar-Repeater (150);
Modulieren (S600) des reflektierten zweiten Signals durch den Radar-Repeater (150);
Aussenden (S700) des modulierten zweiten Signals als ein drittes Signal (230) durch den Radar-Repeater (150);
Empfangen (S800) des zweiten Signals (220) und dritten Signals (230) und/oder der Reflexion des ersten, zweiten und dritten Signals durch einen Radar-Empfänger (130) der Radar-Einrichtung (100);
Auswerten (S900) des von dem Radar-Empfänger (130) der Radar-Einrichtung (100) empfangen zweiten Signals (220) und dritten Signals (230) und/oder der empfangenen Reflexion des ersten, zweiten und dritten Signals und Berechnen eines Umfeldes aus einer jeweiligen Perspektive des mindestens einen Radar-Repeaters (150).

3. Vorrichtung oder Verfahren nach einem der vorhergehenden Ansprüche, wobei die Auswerteeinheit (190) weiter eingerichtet ist, eine Distanz und/oder Geschwindigkeit von dem mindestens einen Radar-Repeater (150) zu Objekten (300) im Umfeld des Radar-Repeaters (150) zu berechnen; und/oder
wobei die Radareinrichtung (100) über Winkelschätzfähigkeit verfügt und die Auswerteeinheit (190) weiter eingerichtet ist, eine Position des mindestens einen Radar-Repeaters (150) zu bestimmen.

4. Vorrichtung oder Verfahren nach einem der vorhergehenden Ansprüche, wobei in dem von jedem Radar-Repeater (150) ausgesendeten zweiten Signal (220) und/oder dritten Signal (230) eine eindeutige individuelle Identifikation des jeweiligen Radar-Repeaters (150) kodiert ist; und/oder
wobei in dem von jedem Radar-Repeater (150) ausgesendeten zweiten Signal (220) und/oder dritten Signal (230) eine eindeutige individuelle Identifikation des jeweiligen Signals kodiert ist; und/oder
wobei der mindestens eine Radar-Repeater (150) weiter eingerichtet ist, das zweite Signal (220) und/oder dritte Signal (230) vor dem Aussenden zu verstärken.

5. Vorrichtung oder Verfahren nach einem der vorhergehenden Ansprüche, wobei der mindestens eine Radar-Repeater (150) nicht eingerichtet ist außer der Modulation eines empfangen Signals, vorzugsweise einer Verstärkung des empfangenen Signals und vorzugsweise der Kodierung einer eindeutige Identifikation des jeweiligen mindestens einen Radar-Repeaters (150) und/ oder Signals weitere Signalverarbeitung und Signalauswertung zu umfassen und eingerichtet ist, das empfange erste Signal (210) unverzüglich zu modulieren und als zweites Signal (220) wieder auszusenden und die empfange Reflexion des zweiten Signals (220) unverzüglich zu modulieren und als drittes Signal (230) wieder auszusenden.

6. Vorrichtung oder Verfahren nach einem der vorhergehenden Ansprüche, wobei das mindestens eine Objekt (180) mehrere Radar-Repeater (150) umfasst.

7. Vorrichtung oder Verfahren nach Anspruch 6, wobei der Radar-Empfänger (130) weiter eingerichtet ist, die zweiten und dritten Signale und/oder deren Reflexionen aller Radar-Repeater (150) zu empfangen und die Auswerteeinheit (190) weiter eingerichtet ist, das Umfeld aus der jeweiligen Perspektive aller Radar-Repeater (150), von denen Signale empfangen wurden, zu berechnen.

8. Vorrichtung oder Verfahren nach Anspruch 6 oder 7, wobei die Auswerteeinheit (190) weiter eingerichtet ist, mehrere empfangene zweite Signale (220) und/oder dritte Signale (230) und/oder deren Reflexionen anhand der individuellen Identifizierung zu trennen und jeweils einzeln auszuwerten.

9. Vorrichtung oder Verfahren nach Anspruch 6 bis 8, wobei die Auswerteeinheit (190) eingerichtet ist, insbesondere auf Basis von Unterschieden in mindestens einer Signalphase und/oder Laufzeit des zweiten Signals (220) und/oder dritten Signals (230) Winkel, Lage und/oder Orientierung der Umgebungsobjekte (300) zu bestimmen.

10. Vorrichtung oder Verfahren nach einem der vorhergehenden Ansprüche, wobei die Radareinrichtung (100) moduliertes Radar, z.B. ein OFDM-Radar oder ein FMCW-Radar, verwendet.
